Europäisches Patentamt

European Patent Office

Office européen des brevets

(11) Publication number: 0 216 708 B1

# EUROPEAN PATENT SPECIFICATION

(45) Date of publication of patent specification: 01.04.92  (51) Int. Cl.⁵: **G11B 23/033**, G11B 23/00

(21) Application number: **86402089.6**

(22) Date of filing: **24.09.86**

(54) **Disk cartridge.**

(30) Priority: **25.09.85 JP 211976/85**

(43) Date of publication of application:
**01.04.87 Bulletin 87/14**

(45) Publication of the grant of the patent:
**01.04.92 Bulletin 92/14**

(84) Designated Contracting States:
**AT DE FR GB NL**

(56) References cited:
**EP-A- 0 133 541
GB-A- 2 082 372
GB-A- 2 102 188
GB-A- 2 127 206
GB-A- 2 163 887**

**RESEARCH DISCLOSURE, no. 244, August
1984, disclosure no. 24426, Havant, Hampshire, GB; "Magnetic disk cartridge"**

(73) Proprietor: **SONY CORPORATION
7-35 Kitashinagawa 6-Chome Shinagawa-ku
Tokyo 141(JP)**

(72) Inventor: **Nemoto, Tsuneo
c/o Sony Corporation 7-35 Kitashinagawa,
6-chome
Shinagawa-ku Tokyo(JP)**
Inventor: **Kaneko, Mika
c/o Sony Corporation 7-35 Kitashinagawa,
6-chome
Shinagawa-ku Tokyo(JP)**

(74) Representative: **Descourtieux, Philippe et al
CABINET BEAU de LOMENIE 55 rue
d'Amsterdam
F-75008 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a disk cartridge comprising a cartridge and a sheet-like recording medium which is rotatably accommodated in the cartridge and fixed to the periphery of a circular centre plate, and the invention is best suited for applying to a disk cartridge including a micro floppy disk, for example, comprising a magnetic sheet having a diameter of 3.5 inches.

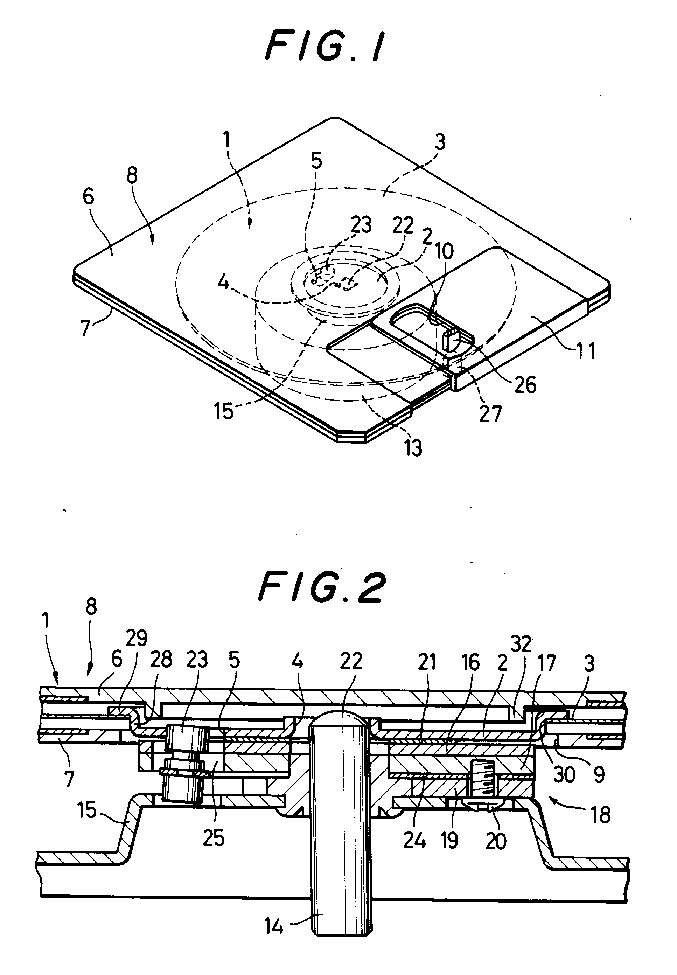

Figures 1 to 3 show a conventional disk cartridge including a micro floppy disk and a driving device for rotating the micro floppy disk.

As illustrated in Figures 1 and 2, a floppy disk 1 (simply described as "disk" hereafter) comprises a circular centre plate 2 of stainless steel or the like and a magnetic sheet 3, namely, a sheet-like recording medium having a diameter of 3.5 inches and fixed to the periphery of the circular centre plate 2. An almost square centre hole 4 and an almost rectangular eccentric hole 5, which is arranged aslant of the centre hole 4 at a predetermined angle, are provided in the centre plate 2.

The disk 1 is rotatably accommodated in a cartridge 8 comprising an upper half 6 and a lower half 7 which are made of synthetic resin, and the circular centre plate 2 is loosely fitted in a turntable insertion hole 9 which is provided in the centre portion of the lower half 7. A pair of upper and lower head insertion holes 10 provided in the respective upper and lower halves 6 and 7 along a radial direction of the magnetic sheet 3 are openable and closable by the use of shutters 11.

The driving device is disposed in a disk player (not shown) and comprises a turntable 15 which is so fixed to the upper end portion of the shaft 14 of a motor 13 as to be horizontally rotated. A magnetic chuck 18 comprising a yoke 16 and a magnetic plate 17 is secured to the upper side of the turntable 15 with screws 20 through a spacer 19, and a thin slippery sheet 21 of non magnetic material is stuck in the centre portion of the upper face of the magnetic chuck 18. Furthermore, a centre pin 22, namely, the distal end of the motor shaft 14, projects upwards from the magnetic chuck 18 in the centre portion thereof, and a driving pin 23 is provided apart from the centre of the magnetic chuck 18. The driving pin 23 is secured to a leaf spring 24 sandwiched in between the magnetic plate 17 and the spacer 19, and projects upwards from the magnetic chuck 18 through a through hole 25 thereof.

As shown in Figure 1, when the cartridge 8 is horizontally mounted on the turntable 15 under a state that the shutter 11 is opened, the magnetic chuck 18 is inserted in the turntable insertion hole 9 as shown in Figure 2, and the circular centre plate 2 of the disk 1 is attracted by the magnetic force generated by the magnetic chuck 18 and horizontally located on the slippery sheet 21. Simultaneously, the centre pin 22 and the driving pin 23 of the turntable 15 are fitted into the circular centre hole 4 and the eccentric hole 5 of the circular centre plate 2, respectively. As shown in Figure 3, a pair of upper and lower magnetic heads 26 and 27 are inserted in the respective insertion holes 10 and come in contact with the upper and lower faces of the magnetic sheet 3 of the disk 1, respectively.

When the motor 13 is started after the disk 1 is loaded and the turntable 15 is rotated, the circular centre plate 2 is positioned by the help of the centre pin 22 and the torque for rotating the circular centre plate 2 is transmitted through the driving pin 23, so that the magnetic sheet 3 is horizontally rotated in the cartridge 8. Therefore, when the magnetic heads 26 and 27 are moved in the radius direction of the magnetic sheet 3, recording or reproducing is selectively performed on one of the two faces of the magnetic sheet 3.

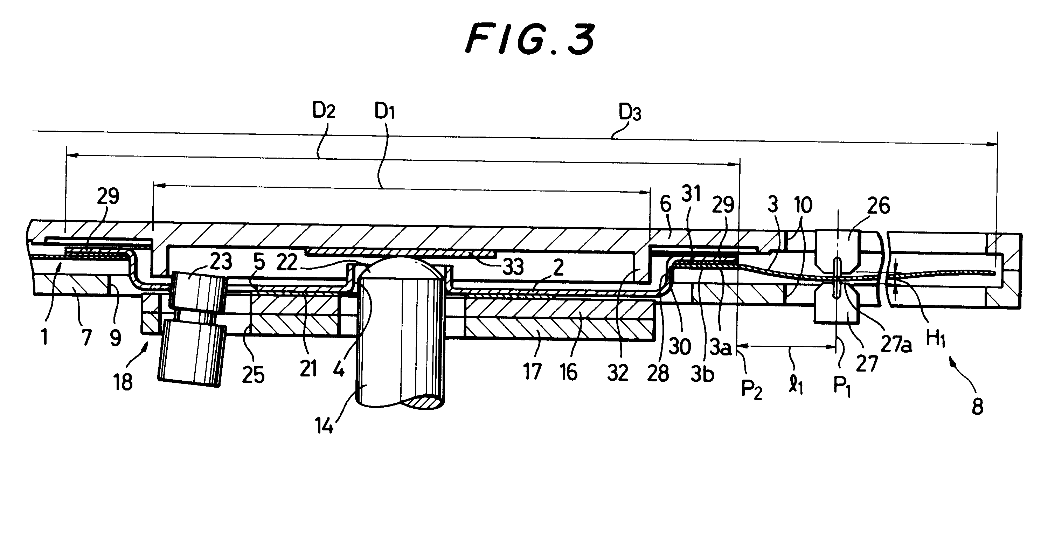

Meanwhile, the circular centre plate 2 is so formed by means of press work as to have a cylindrical portion 28 standing on the outer edge thereof and a flange portion 29 externally extending from the cylindrical portion 28 as shown in Figure 3. The outer periphery of the cylindrical portion 28 is fitted into a round hole 30 provided in the centre portion of the magnetic sheet 3 so as to make the centre of the magnetic sheet 3 coincide with the centre of the circular centre plate 2, and then the portion 3a around the round hole 30 of the magnetic sheet 3 is stuck to the lower face of the flange portion 29 with an adhesive 31.

Furthermore, a ring-like locating rib 32 having a large diameter $D_1$ is integrally formed with the upper half 6 in the centre portion of the inner face thereof as shown in Figure 3 and is placed within the inner periphery of the cylindrical portion 28 of the circular centre plate 2 so as to position the magnetic sheet 3 in the cartridge 8, otherwise the magnetic sheet 3 could horizontally move over a predetermined extent in the cartridge 8 and, as a result, the edge of the magnetic sheet 3 could come in contact with the wall of the cartridge 8 and be broken. The top of the centre pin 22 of the turntable 15 abuts against the slippery sheet 33 which is stuck to the inner face of the upper half 6 as shown in Figure 3.

However, due to fluctuations in thickness of the layer formed by the adhesive 31, with which the portion 3a around the round hole 30 of the magnetic sheet 3 is stuck on the lower face of the flange portion 29 of the circular centre plate 2 as shown in Figure 3, or for other reasons, a height difference $H_1$ arises between the lower face 3b of the portion 3a around the round hole 30 and the upper face 27a of the lower magnetic head 27, which functions as a standard to determine the height of the magnetic sheet 3. Thus, the horizontal upper face 27a of the lower magnetic head 27 cannot whooly come into contact with the magnetic sheet 3, and a deflection is generated in the radius direction of the magnetic sheet 3, resulting in making bad contacts between the magnetic heads 26,27 and the magnetic sheet 3. Such bad contacts particularly occur when the magnetic heads 26,27 are moved to a position $P_1$ where the magnetic heads 26,27 approach nearest to the centre of the circular centre plate 2 for recording or reproducing.

That is, the portion 3a around the round hole 30 of the magnetic sheet 3 being fixed with the adhesive 31 to the lower face of the flange portion 29 of the circular centre plate 2, it becomes more difficult to have the magnetic sheet 3 deflected, as the magnetic head 26, 27 approaches the flange portion 29 of the circular centre plate 2 and the contact condition between the magnetic heads 26, 27 and the magnetic sheet 3 becomes worse, when the magnetic heads 26, 27 reach the position $P_1$. As a result, troubles, such as aberration of tracking, spacing loss or the like arises. Such troubles are particularly significant in the case of disks with a high density of recording, such as disks having a capacity of two mega bytes, as compared with disks for standard recording, having a capacity of 1 mega byte.

Therefore, if the diameter $D_2$ of the circular centre plate 2 can be made much smaller than the diameter $D_3$ ( = 3.5 inches) of the magnetic sheet 3, the above contacts are improved, because the distance $L_1$ between the position $P_1$ in which the magnetic heads 26, 27 approach nearest to the flange portion 29 and a position $P_2$ which coincides with the outer edge of the portion 3a of the sheet 3 fixed by the adhesive 31 around the round hole 30, is made large enough. But, to make the diameter $D_2$ small is not simple.

That is, in a conventional disk, the locating rib 32 having a relatively large diameter $D_1$ and integrally formed with the upper half 6 is inserted within the inner periphery of the cylindrical portion 28 of the circular centre plate 2 so as to position the magnetic sheet 3 in the cartridge 8, so that it is difficult to change the diameter $D_2$ of the circular centre plate 2 below a predetermined value. Thus, the diameter $D_2$ of the circular centre plate 2 still remains large in relation to the diameter $D_3$ of the magnetic sheet 3.

Efforts have also been directed at improving the thermal deformation resistance of the recording disk due to a deformation of the hub body. This is achieved in a disk cartridge disclosed in EP-A-0 133 541, in which the hub assembly is formed by a hub body and a reinforcing metal plate laid on one of the surfaces of the hub body.

Also, to restrict radial movement of a flexible magnetic disk within a cartridge, it has been proposed in document GB-A-2 082 372, to provide the disk with a dished hub that is located externally by a somewhat oversize hole in the base of the diskette, and internally by a somewhat undersize depending rim on the top of the diskette.

Accordingly, it is an object of the present invention to provide a disk cartridge in which the diameter of a circular centre plate can be made small in relation to the diameter of a recording medium, such as a magnetic sheet or the like, to avoid troubles such as aberrations of tracking, spacing losses and the like due to defective contacts of recording and/or reproducing heads, such as magnetic heads or the like with the recording medium at the time of recording or reproducing.

Another object of the present invention is to provide a disk cartridge best suited for high density recording, such as for example, for a micro floppy disk having a capacity of two mega bytes.

Still another object of the invention is to provide a disk cartridge in which the diameter of the circular centre plate can be made small while securing the stability of the circular centre plate on a turntable and providing a sufficiently large contact area to allow sticking of the sheet-like recording medium fast to a flange portion of the circular centre plate.

The above and other objects are attained by a disk cartridge of the type including a sheet-like recording medium fixed to the periphery of a circular centre plate in which a centre hole and an eccentric hole are provided, the sheet-like recording medium being rotatably accommodated in a cartridge comprising an upper half and a lower half, and the circular centre plate being loosely fitted in a turntable insertion hole provided in the lower half and centred with respect to the upperhalf in order to achieve the positioning of the recording medium in the cartridge which is obtained by restricting the movement of the centre plate, wherein a ring for positioning said centre plate in said cartridge and having a substantially smaller diameter than the outside diameter of the circular centre plate is formed integrally and coaxially with said circular centre plate in its central part on the upper side thereof to surround said centre hole and said ring is loosely fitted inside of a locating rib having also a substancially smaller diameter than said outside diameter of said circular centre plate and formed integrally with said upper half on the inside thereof so that the head/recording medium interfacing errors are reduced.

Said ring having a small diameter can be made of synthetic resin, and formed by outsert molding to be stuck very fast to the circular centre plate.

The invention will be more readily understood from the reading of the following description made with reference to the accompanying drawings wherein :

Figure 1 is a perspective view of a conventional disk cartridge;

Figure 2 is a sectional side view of the principal portion of the disk cartridge of Figure 1;

Figure 3 is a sectional view of the principal portion of the disk cartridge of Figure 1 on an enlarged scale;

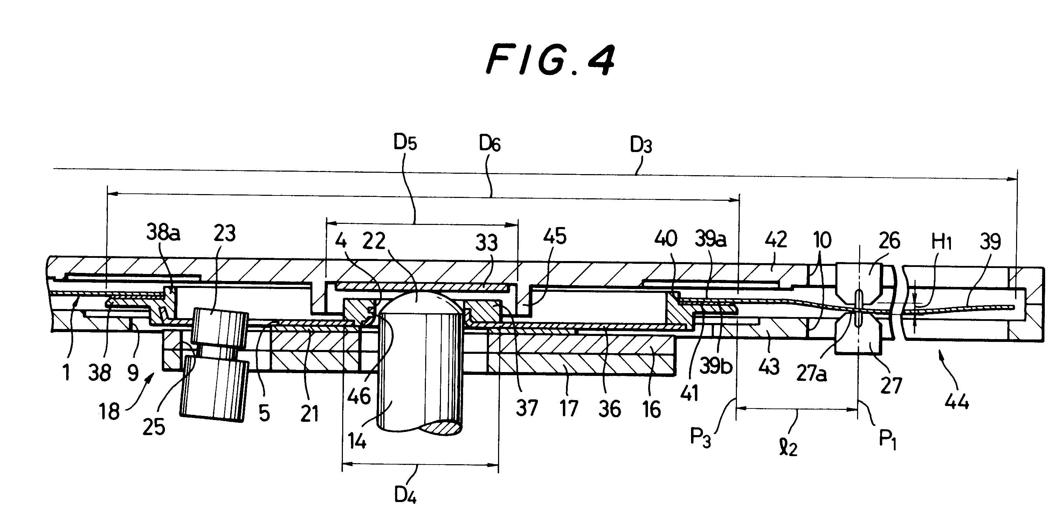

Figure 4 is a sectional side view of a disk cartridge on an enlarged scale according to an embodiment of this invention;

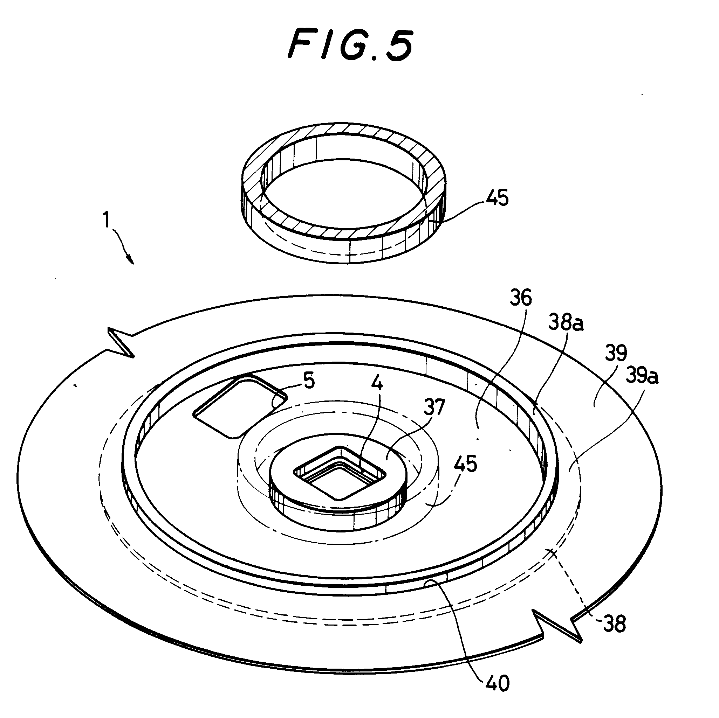

Figure 5 is a perspective view of the principal portion of the disk cartridge of Figure 4;

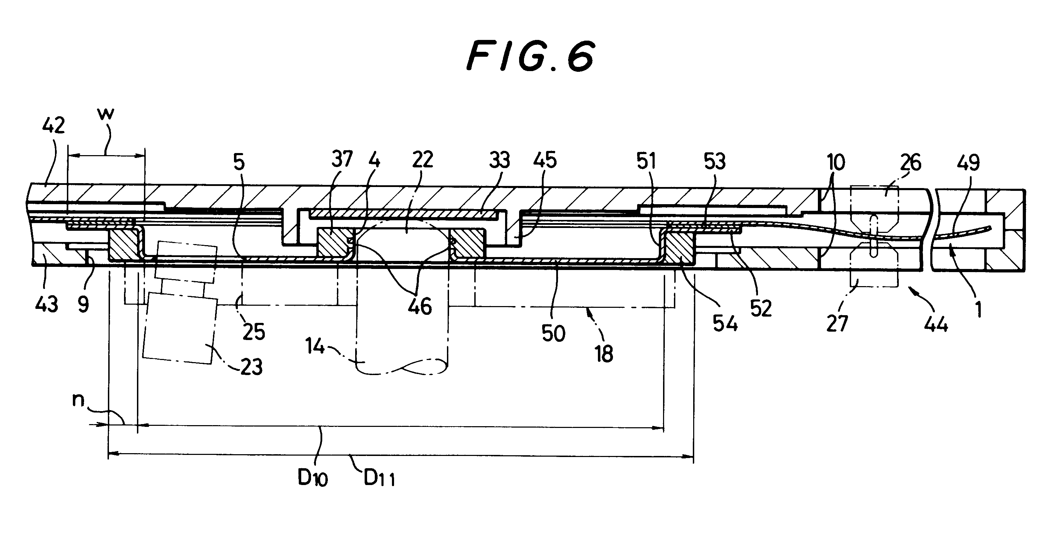

Figure 6 is a sectional side view of a disk cartridge according to a second embodiment of this invention; and

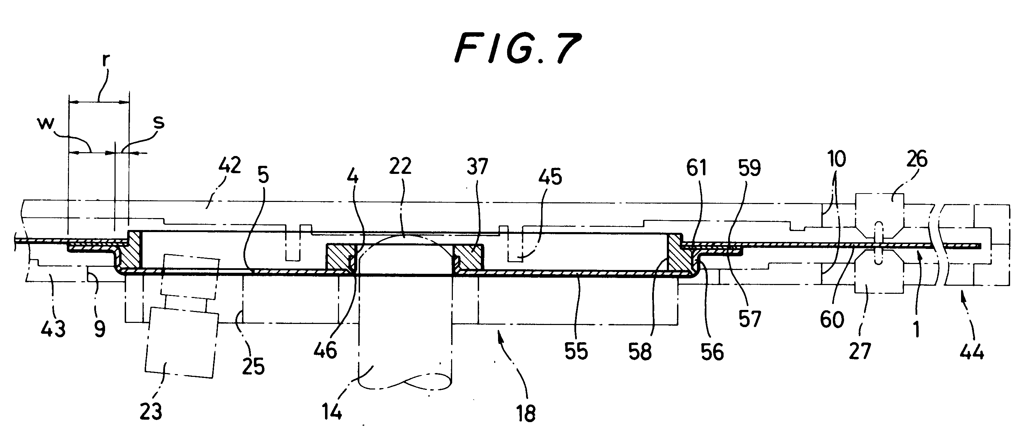

Figure 7 is a sectional side view of a disk cartridge according to a third embodiment of this invention.

Firstly, a first embodiment of this invention applied to a disk cartridge including a micro floppy disk will be described hereinafter by reference to Figures 4 and 5. In all the drawings, same or similar parts are denoted by the same reference numerals.

Disk 1 has a circular centre plate 36 made of metal, such as stainless steel or the like. A ring 37 having a small diameter $D_4$ and made of synthetic resin, such as ABS resin or the like is formed integrally by outsert moulding with a wall of the circular centre plate 36 projecting upwards from the outer surface thereof, and forming a centre hole 4 of almost square shape, the ring 37 being provided coaxially with the centre hole 4. In the wall of the circular centre plate 36, a joining portion 46, such as a hole or a recess is provided to allow the ring 37 to stick to the circular centre plate 36 as firmly as possible.

A flange 38 made of synthetic resin, such as ABS resin or the like is so formed integrally by outsert moulding with the circular centre plate 36 on the outer edge thereof as to project upwards from the circular centre plate 36 and extend horizontally. The flange 38 has a cylindrical portion 38a which projects upwardly therefrom on the fixed end thereof and is inserted into a circular hole 40 provided in the centre portion of a sheet-like recording medium, such as a magnetic sheet 39 having a diameter of 3.5 inches, so as to make the centre of the magnetic sheet 39 coincide with the center of the circular centre plate 36. A portion 39a of the magnetic sheet 39 around the hole 40 is secured to the upper face of the flange 38 by means of an adhesive 41 or the like.

The disk 1 is rotatably accommodated in a cartridge 44 comprising an upper half 42 and a lower half 43 and made of synthetic resin. The circular centre plate 36 is loosely fitted in a turntable insertion hole 9 provided in the lower half 43. A cylindrical locating rib 45 having a small inside diameter $D_5$ larger than $D_4$ is integrally formed with the upper half 42 in the centre portion of the inner face thereof. The ring 37 having a small diameter $D_4$ and secured to the circular centre plate 36 in the vicinity of the centre thereof is located within the inner periphery of the locating rib 45 having a small inside diameter $D_5$ so as to have the magnetic sheet 39 positioned in the cartridge 44. Of course, the diameter of the locating rib 45 is determined so that the locating rib 45 does not interfere with the driving pin 23 of the turntable 15, and, also, the inside diameter of the flange 38 is determined so that the flange 38 does not interfere with the eccentric hole of the circular centre plate 36.

As shown in Figure 4, the diameter $D_6$ of the flange 38 can be made small enough in relation to the diameter $D_3$ (= 3.5 inches) of the magnetic sheet 39 to obtain a relatively large distance $l_2$ between the outer edge $P_3$ of the portion 39a of the magnetic sheet fixed on the upper face of the flange 38 around the hole 40 and the position $P_1$ - (the same as hereinbefore defined), where the magnetic heads 26,27 approach nearest to the centre of the circular centre plate 36 for recording or reproducing. In other words, comparing $D_6$, $l_2$ shown in Figure 4, and $D_2$,$l_1$ shown in Figure 3, it appears that $D_2$ is larger than $D_6$, so that $l_2$ is larger than $l_1$ by the difference between $D_2$ and $D_6$.

According to this invention, and because the distance $l_2$ is made large enough, the contact condition of the magnetic sheet 39 with the magnetic heads 26 and 27 is much improved even when a height difference $H_1$ arises between the lower face 39b of the portion 39a around the round hole 40 of the magnetic sheet 39 and the upper face 27a of the lower magnetic head 27, acting as a standard to determine the height of the magnetic sheet 39, due to, for example, a fluctuation of the thickness of the adhesive layer, through which the portion 39a around the round hole 40 is stuck to the upper face of the flange 38 of the circular centre plate 36. Thus, troubles such as the aberration of tracking, spacing loss or the like are not encountered.

Figures 6 and 7 show other embodiments concerning the portion of the circular centre plate to which the magnetic sheet is fixed. In Figure 6, a circular plate 50 is shown which is similar in appearance to the circular centre plate 36 shown in Figure 5. The circular centre plate 50 has a cylindrical portion 51 with a smaller diameter $D_{10}$, but has a flange portion 52 with a width w which is the same as in the preceding embodiment to allow a magnetic sheet 49 to be stuck fast to the circular centre plate 50 by the help of an adhesive 53. But the stability of the circular centre plate 50 on the turntable 15 could be affected as the diameter $D_{10}$ of the cylindrical portion 51 is made small. Hence, a ring 54 made of synthetic resin and having a width n and a diameter $D_{11}$, is formed on the periphery of the cylindrical portion 51 by outsert moulding, so as to improve the stability of the circular centre plate 50 on the turntable 15.

In Figure 7, the diameter of a cylindrical portion 56 of a circular centre plate 55 is not decreased. Instead, the width w of a flange portion 57 of the circular centre plate 55 is decreased so as to make the diameter of the circular centre plate 55 smaller. However, due to the narrow width w of the flange portion 57, the contact area between the magnetic sheet 60 and the flange portion is too small to make the magnetic sheet 60 stick fast to the circular centre plate 55. Therefore, a ring 58 made of synthetic resin and having a stuck portion 61 of a width s is formed integrally by outsert moulding with the circular centre plate 55 on the inner periphery of the cylindrical portion 56 thereof. Thus, the magnetic sheet 60 is stuck over a width r ( = w + s) by the help of an adhesive 59, so that the magnetic sheet 60 is steadily integral with the circular centre plate 55.

It should be noted that the ring 37 is not necessarily formed by outsert moulding as in the above described embodiments. It can be secured to the circular centre plate 36 by means of adhesion, weld, screws or the like. Further, the sheet-like recording medium can be other than a magnetic sheet.

In addition, this invention can be applied not only to disk cartridges including micro floppy disks but also to disk cartridges including recording mediums which are used under various types of recording or reproducing.

## Claims

1. A disk cartridge with a sheet-like recording medium (39; 49; 60) fixed to the periphery of a circular centre plate (36; 50; 55) in which a centre hole (4) and an eccentric hole (5) are provided, the sheet-like recording medium (39; 49; 60) being rotatably accommodated in a cartridge (44) comprising an upper half (42) and a lower half (43), and the circular centre plate (36; 50; 55) being loosely fitted in a turntable insertion hole (9) provided in the lower half (43) and centred with respect to the upper half (42) in order to achieve the positioning of the recording medium in the cartridge (44) which is obtained by restricting the movement of the centre-plate (36; 50; 55), characterized in that a ring (37) for positioning said centre plate (36; 50; 55) in said cartridge (44) and having a substantially smaller diameter (D4) than the outside diameter (D6) of the circular centre plate (36; 50; 55), is formed integrally and coaxially with said circular centre plate (36; 50; 55) in its central part on the upper side thereof to surround said centre hole (4), and said ring (37) is loosely fitted inside of a locating rib (45) having also a substancially smaller diameter (D5) than said outside diameter (D6) of said circular centre plate (36; 50; 55) and formed integrally with said upper half (42) on the inside thereof, so that head/recording medium interfacing errors are reduced.

2. A disk cartridge according to claim 1, characterized in that said ring (37) formed integrally with said circular centre plate (36; 50; 55) is made of synthetic resin.

3. A disk cartridge according to claim 2, characterized in that joining means (46) are provided in the margin of said centre hole of the circular centre plate so as to allow said ring (37) to stick fast to said circular centre plate (36; 50; 55).

## Revendications

1. Cassette à disque comprenant un support d'enregistrement en forme de feuille (39 ; 49 ; 60) fixé à la périphérie d'une plaque de centrage (36 ; 50 ; 55) circulaire dans laquelle sont prévus un trou de centrage (4) et un trou excentré (5), le support d'enregistrement en forme de feuille (39 ; 49 ; 60) étant reçu à rotation dans une cassette (44) comprenant une moitié supérieure (42) et une moitié inférieure (43) et la plaque de centrage (36 ; 50 ; 55) circulaire étant ajustée avec jeu dans un trou d'insertion de tourne-disque (9) prévu dans la moitié inférieure (43) et centrée par rapport à la moitié supérieure (42) afin d'obtenir le positionnement du support d'enregistrement dans la cassette (44) qui est obtenu en limitant le mouvement de la plaque de centrage (36 ; 50 ; 55), caractérisée en ce qu'une bague (37) pour positionner ladite plaque de centrage (36 ; 50 ; 55) dans ladite cassette (44) et ayant un diamètre ($D_4$) sensiblement inférieur au diamètre externe ($D_6$) de la plaque de centrage (36 ; 50 ; 55) circulaire est formée d'une pièce et coaxialement avec ladite plaque de centrage (36 ; 50 ; 55) circulaire dans sa partie centrale sur le côté supérieur de celle-ci pour entourer ledit trou de centrage (4), et ladite bague (37) est ajustée avec jeu à l'intérieur d'une nervure de positionnement (45) ayant aussi un diamètre ($D_5$) sensiblement inférieur audit diamètre externe ($D_6$) de ladite plaque de centrage (36 ; 50 ; 55) circulaire et formée d'une pièce avec ladite moitié supérieure (42) à l'intérieur de celle-ci, de sorte que les erreurs d'interface tête/support d'enregistrement sont réduites.

2. Cassette à disque selon la revendication 1, caractérisée en ce que ladite bague (37) formée d'une pièce avec ladite plaque de centrage (36 ; 50 ; 55) circulaire est en résine synthétique.

3. Cassette à disque selon la revendication 2, caractérisée en ce que des moyens de liaison (46) sont prévus dans le bord du trou de centrage de la plaque de centrage circulaire pour permettre à ladite bague (37) d'adhérer solidement à ladite plaque de centrage (36 ; 50 ; 55) circulaire.

**Patentansprüche**

1. Plattenkassette mit einem scheibenförmigen Aufzeichnungsträger (39; 49; 60), der am Umfang einer kreisförmigen Mittelplatte (36; 50; 55) befestigt ist, in der eine Mittelöffnung (4) sowie eine exzentrische Öffnung (5) vorgesehen sind, wobei der scheibenförmige Aufzeichnungsträger (39; 49; 60) in einer Kassette (44) drehbar aufgenommen wird, die eine obere Hälfte (42) und eine untere Hälfte (43) besitzt, und wobei die kreisförmige Mittelplatte (36; 50; 55) lose in eine Plattentellereinsetzöffnung (9) eingesetzt wird, die in der unteren Hälfte (43) ausgebildet und im Hinblick auf die obere Hälfte (42) zentriert ist, um das Einstellen des Aufzeichnungsträgers in der Kassette (44) zu erreichen, das man dadurch erhält, daß die Bewegung der Mittelplatte (36; 50; 55) beschränkt wird, dadurch gekennzeichnet, daß ein Ring (37), um die Mittelplatte (36; 50; 55) in der Kassette (44) einzustellen, wobei der Ring (37) einen wesentlich kleineren Durchmesser ($D_4$) als der Außendurchmesser ($D_6$) der kreisförmigen Mittelplatte (36; 50; 55) besitzt, gemeinsam und koaxial mit der kreisförmigen Mittelplatte (36; 50; 55) in deren Mittelteil an der oberen Seite ausgebildet ist, um die Mittelöffnung (4) zu umschließen, wobei der Ring (37) lose in eine Einstellrippe (45) eingesetzt wird, die gleichfalls einen wesentlich kleineren Durchmesser ($D_5$) als der Außendurchmesser ($D_6$) der kreisförmigen Mittelplatte (36; 50; 55) besitzt und gemeinsam mit der oberen Hälfte (42) an deren Innenseite ausgebildet ist, so daß die Zwischenflächenfehler zwischen Kopf und Aufzeichnungsträger vermindert werden.

2. Plattenkassette gemäß Anspruch 1, dadurch gekennzeichnet, daß der Ring (37), der gemeinsam mit der kreisförmigen Mittelplatte (36; 50; 55) ausgebildet ist, aus Kunstharz besteht.

3. Plattenkassette gemäß Anspruch 2, dadurch gekennzeichnet, daß eine Verbindungseinrichtung (46) am Rand der Mittelöffnung der kreisförmigen Mittelplatte vorgesehen ist, um den Ring (37) fest an die kreisförmige Mittelplatte (36; 50; 55) zu kleben.

# FIG. 1

# FIG. 2

# FIG.3

EP 0 216 708 B1

FIG. 4

# FIG.5

FIG.6

# FIG.7

EP 0 216 708 B1